# FASCICULE DE BREVET EUROPEEN

(11) **EP 3 815 980 B1**
(45) Date de publication et mention de la délivrance du brevet: **01.12.2021**
(21) Numéro de dépôt: 20200675.5
(22) Date de dépôt: 08.10.2020
(51) Int. Cl.: B60R 13/02

(54) **AGRAFE DE RETENUE D'UN BANDEAU DE GARNITURE DE PORTE D'UN VÉHICULE AUTOMOBILE**
RÜCKHALTEKLAMMER EINER TÈRINNENVERKLEIDUNG EINES KRAFTFAHRZEUGS
CLIP FOR RETAINING A TRIM STRIP OF A MOTOR VEHICLE DOOR

(30) Priorité: 29.10.2019 FR 1912107
(43) Date de publication de la demande: 05.05.2021
(73) Titulaire: Renault S.A.S., 92100 Boulogne-Billancourt (FR)
(72) Inventeur: BOUILLON, JEAN-CHARLES, 78940 LA QUEUE LEZ YVELINES (FR)

(56) Documents cités:
- DE-A1-102013 214 074
- FR-A1- 2 905 430
- JP-U- H0 580 910
- JP-U- H0 580 911

## Description

L'invention concerne une agrafe de retenue d'un bandeau de garniture intérieur d'une porte d'un véhicule automobile, notamment en zone d'une vitre fixe. L'invention concerne aussi une porte de véhicule automobile équipée de ladite agrafe ainsi que le véhicule comprenant ladite porte.

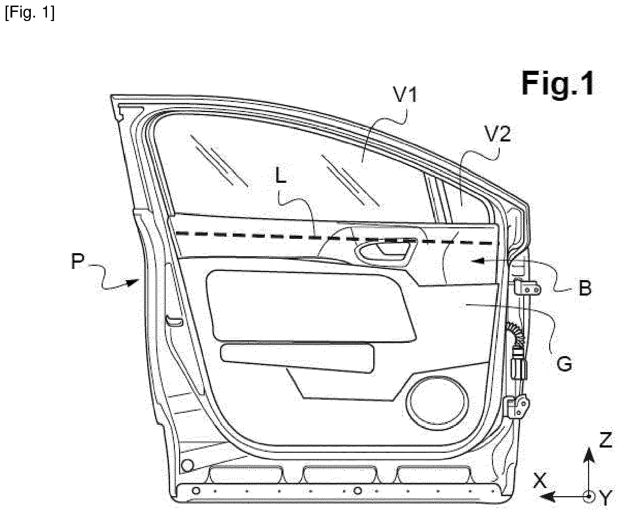

La figure 1 annexée est une vue générale d'une porte de véhicule automobile P, depuis la face intérieure. Cette porte comprend un panneau de porte avec une baie obturée par une vitre mobile V1 et une autre vitre fixe V2 ( ici en zone avant de la porte). Le panneau de porte, classiquement métallique, en particulier en tôle, est recouvert en face intérieure par une garniture G, en général en matière plastique, et par un bandeau de garniture intérieur B, aussi généralement en matière plastique, disposé longitudinalement sous la zone vitrée. Sur la plupart des véhicules, ledit bandeau B monte plus haut que la ligne dite de ceinture L (représentée en pointillés sur la figure 1), qui est la ligne support du joint lécheur relatif à la vitre mobile, et dans lequel s'accroche la clé de bandeau participant à sa fixation. En partie de vitre fixe, la fixation du bandeau est compliquée car c'est une zone sans joint lécheur. Il est notamment assez compliqué de tenir transversalement la partie extrême du bandeau en cette zone de vitre fixe.

C'est un problème géométrique important car le bandeau peut toucher la planche de bord lors de la fermeture de la porte. Le bandeau et/ou la planche de bord peuvent ainsi s'abîmer ou s'user prématurément.

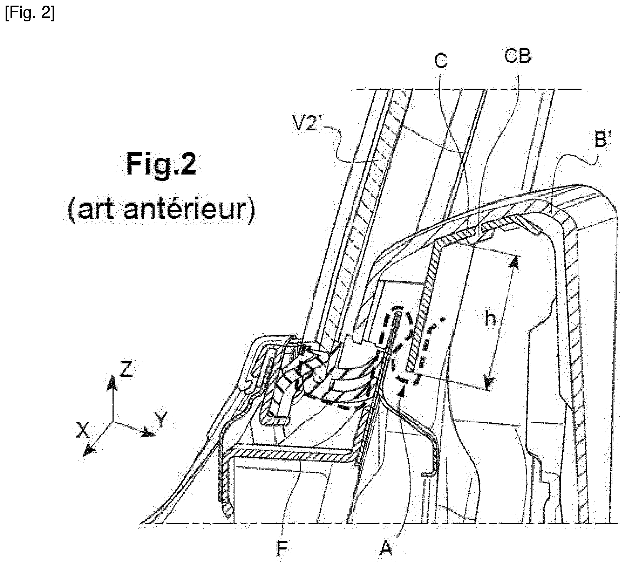

On connaît un système de fixation d'un bandeau qui utilise une agrafe de retenue du bandeau en métal, comme illustrée par la figure 2. La figure 2 illustre selon une vue en perspective et en coupe dans un plan vertical transversal, une porte de véhicule dont le bandeau de porte est retenu par une telle agrafe selon l'art antérieur. Cette agrafe A comprend une partie centrale sensiblement en forme de U retourné et agencée pour être retenue par pincement sur la feuillure métallique F du panneau de porte. Cette agrafe comprend en outre d'un côté de la partie centrale, une partie de retenue avec le joint surmoulé de la vitre fixe V2', et à l'opposé une partie réceptrice de la clé C du bandeau B'. La clé de bandeau qui supporte la partie supérieure du bandeau recourbée vers la zone vitrée, est une pièce longitudinale ajoutée car elle doit être suffisamment haute (hauteur « h ») pour répondre à la géométrie du bandeau et de la zone de fixation. Cette clé est une pièce en plastique qui doit être bouterolée en un point CB avec cette partie interne du bandeau aussi en matière plastique. Toutefois l'accès à la zone de bouterolage étant compliqué, il faut un outil d'assemblage dédié pour réaliser le soudage entre ces éléments en plastique.

Cette solution de l'art antérieur, qui implique d'avoir une pièce supplémentaire formant la clé et une mise en œuvre complexe pour son bouterolage, est assez coûteuse en investissement financier et en temps. De plus la clé devant être relativement haute, la distance entre le point de soudure de la clé avec le bandeau et sa zone de réception la retenant dans l'agrafe est relativement élevée. Ceci crée de la souplesse dans la fixation du bandeau et peut engendrer des déformations au niveau du bandeau et de son système de fixation suite aux dilatations liées aux effets thermiques, par exemple lorsque le véhicule est soumis à l'ensoleillement sur un parking. En outre cette grande distance relative à la clé rapportée nécessite un geste précis de l'opérateur pour garantir son montage dans l'agrafe, car il est possible de monter le bandeau avec la clé en dehors de l'agrafe sans que cela soit visible tant que la porte n'est pas montée sur le véhicule. La détection du mauvais montage étant tardive, il faut faire des retouches coûteuses pour corriger ce défaut hors chaîne de montage. Cette solution peut ainsi s'avérer moyennement efficace mais coûteuse. Le document FR 2 905 430 A1 divulgue une agrafe de retenue selon le préambule de la revendication 1.

L'invention vise à résoudre au moins en partie les inconvénients des systèmes de fixation de l'art antérieur pour maintenir un bandeau de garniture intérieur en zone de vitre fixe d'une porte d'un véhicule automobile, en proposant de nouveaux moyens de retenue dudit bandeau notamment moins sensibles aux dilatations provoquées sous ensoleillement et de préférence plus économiques.

Selon un premier aspect, l'invention fournit une agrafe de retenue d'un bandeau de garniture intérieur d'une porte d'un véhicule comprenant un panneau avec une baie obturée par un vitrage dont une vitre fixe, ladite agrafe étant configurée apte à se solidariser à la feuillure du panneau de porte en zone de vitre fixe. Selon l'invention, l'agrafe se caractérise en ce qu'elle est en matière plastique, et qu'elle comprend une poutre longitudinale prolongée en sa partie inférieure d'un premier côté longitudinal par des doigts d'appui configurés pour une retenue de l'agrafe par appui sur la feuillure du panneau de porte et de l'autre côté longitudinal, soit le côté longitudinal opposé audit premier côté, par des doigts d'accrochage configurés pour s'accrocher sur la feuillure du panneau de porte, et entre lesquels se situe un doigt de positionnement longitudinal de l'agrafe dans la feuillure.

L'agrafe selon l'invention présente les caractéristiques énoncées ci-après, prises seules ou en combinaison.

Lesdits doigts d'appui et d'accrochage s'étendent globalement et sensiblement verticalement sous ladite poutre.

Ledit doigt de positionnement s'étend transversalement à ladite poutre.

De préférence, lesdits doigts d'appui sont au nombre de deux, et de même lesdits doigts d'accrochage sont au nombre de deux. En particulier les doigts d'un même côté sont décalés par rapport aux doigts de l'autre côté de manière à avoir une meilleure retenue de l'agrafe à la feuillure du panneau de porte.

Le doigt de positionnement longitudinal est disposé en principe du côté de l'agrafe qui sera opposé au côté vitre afin qu'il soit accessible une fois en place sur la feuillure de porte.

De préférence selon l'invention, l'agrafe comprend une zone d'accueil, apte à recevoir le bandeau de garniture, qui s'étend longitudinalement au-dessus de la partie supérieure de la poutre. Ladite zone d'accueil comprend en outre des moyens de positionnement transversal du bandeau de garniture. Ainsi l'emploi d'une clé n'est plus nécessaire à la retenue du bandeau de garniture.

En particulier selon l'invention, lesdits moyens de positionnement transversal du bandeau de garniture comprennent une butée contre laquelle viendra se caler transversalement le bandeau de garniture.

Ladite butée est de préférence une paroi formant en outre une rampe de guidage réceptrice d'un boitier de positionnement intégré au bandeau de garniture.

L'agrafe peut être ainsi solidarisée à la feuillure du panneau de porte prise en sandwich entre les doigts d'appui et d'accrochage disposés de part et d'autre de l'agrafe, et supporter la partie interne du bandeau de porte côté vitrage, en général de forme recourbée vers le vitrage.

Selon un mode de réalisation avantageux de l'invention, lesdits moyens de positionnement transversal du bandeau de garniture comprennent des moyens de réglage du positionnement transversal du bandeau, aptes à coopérer avec le bandeau de garniture, pour faciliter le réglage de la position transversale dudit bandeau par rattrapage des défauts géométriques des divers composants.

Plus particulièrement, lesdits moyens de positionnement transversal du bandeau de garniture comprennent une butée et lesdits moyens de réglage comprennent des nervures s'étendant au moins en partie sur la surface de ladite butée.

En particulier selon l'invention, lesdits moyens de réglage en zone d'accueil de l'agrafe sont constitués de nervures s'étendant au moins en partie sur la surface de la butée de ladite zone d'accueil, et plus particulièrement depuis la paroi supérieure de la poutre. En particulier, lesdites nervures sont au nombre de deux à cinq.

De préférence selon l'invention, l'agrafe est constituée d'une pièce monobloc et en matière plastique chargée afin de rendre l'agrafe massive et résistante mécaniquement. La matière plastique comprend par exemple des charges minérales.

De préférence selon l'invention, l'agrafe comprend une languette de déverrouillage, située de préférence dans le prolongement de la partie inférieure dudit doigt de positionnement longitudinal de l'agrafe, pour faciliter son retrait.

En outre l'agrafe peut présenter avantageusement une structure de renfort mécanique, par exemple par caissonnage de la poutre et/ou de ses divers doigts, et/ou par ajout de flancs de renfort mécanique.

Selon un second aspect, l'invention a pour objet une porte d'un véhicule automobile comprenant un panneau qui comprend au moins une baie obturée par un vitrage dont une vitre fixe et un bandeau de garniture intérieur retenu à la feuillure du panneau par une agrafe de retenue en zone de ladite vitre fixe, et qui se caractérise en ce que ladite agrafe de retenue est telle que définie précédemment, et en ce que la feuillure du panneau comprend en outre un orifice récepteur du doigt de positionnement longitudinal de ladite agrafe.

Selon un mode préféré de l'invention, la porte est telle que ladite agrafe de retenue comprend une zone d'accueil du bandeau comportant des moyens de positionnement transversal du bandeau de garniture et ledit bandeau comprend un boitier de positionnement transversal positionné sur la zone d'accueil. Plus particulièrement selon l'invention, lesdits moyens de positionnement transversal en zone d'accueil comprennent une butée et ledit boitier de positionnement transversal du bandeau positionné sur la zone d'accueil est calé contre ladite butée.

Plus particulièrement encore, la porte se caractérise en ce que lesdits moyens de positionnement transversal en zone d'accueil incluent des moyens de réglage du positionnement transversal dudit bandeau qui sont constitués de nervures s'étendant au moins en partie sur la surface de la butée en zone d'accueil de l'agrafe, et en ce que ledit bandeau de garniture intérieur comprend un boitier de positionnement constitué de nervures intégrées audit bandeau interférant avec lesdites moyens de réglage en zone d'accueil de l'agrafe.

L'invention a aussi pour objet un véhicule automobile comprenant au moins une porte latérale telle que définie précédemment.

Plus particulièrement, le véhicule comprend une planche de bord (comme usuellement), et ladite porte latérale est une porte située à proximité de la planche de bord du véhicule.

D'autres particularités et avantages de l'invention ressortiront à la lecture de la description faite ci-après d'un mode de réalisation particulier de l'invention, donné à titre indicatif mais non limitatif, en référence aux figures annexées pour lesquels :

[Fig. 1] illustre une porte latérale gauche, vitrée avec une partie fixe, d'un véhicule automobile, vue depuis sa face intérieure ;

[Fig. 2] illustre, selon une vue en perspective et en coupe transversale dans le plan vertical YZ, une porte de véhicule dont le bandeau de garniture intérieur est retenu par une agrafe selon l'art antérieur ;

[Fig. 3] illustre selon une vue en perspective et de trois-quarts, une agrafe de retenue selon l'invention, depuis le dessous et l'une de ses faces longitudinales, pour la retenue du bandeau de garniture intérieur d'une porte d'un véhicule automobile;

[Fig. 4] illustre selon une vue en perspective et de trois-quarts de l'agrafe selon l'invention, depuis le dessus et la même face longitudinale qu'en figure 3 ;

[Fig. 5] illustre selon une vue en perspective et de trois-quarts de l'agrafe selon l'invention, depuis sa face opposée à celle des représentations en figures 3 ou 4;

[Fig. 6] illustre schématiquement l'agrafe selon l'invention représentée aux figures 3 à 5, installée sur la feuillure d'un panneau de porte en zone d'une vitre fixe, sans le bandeau de garniture intérieur ;

[Fig. 7] illustre, selon une vue en perspective et en coupe transversale dans le plan vertical YZ, une porte de véhicule dont le bandeau de porte est retenu par une agrafe selon l'invention représentée aux figures 3 à 5 ou en figure 6 ;

[Fig. 8] illustre, selon une vue en coupe longitudinale dans le plan VIII-VII , la porte de véhicule de la figure 7 ;

[Fig. 9] illustre, selon une vue en coupe longitudinale dans le plan transversal XY, un mode de réalisation particulier d'une zone de l'agrafe coopérant avec le bandeau de garniture pour une porte de véhicule similaire à la figure 7.

Les orientations exprimées dans la description des figures sont données en référence au repère XYZ classique du véhicule dans lequel X représente la direction longitudinale avant-arrière du véhicule, orientée vers l'arrière, Y la direction transversale du véhicule, orientée vers la droite, et Z la direction verticale orientée vers le haut du véhicule.

Quand les orientations exprimées dans la description des figures du panneau de porte du véhicule ou de la porte elle-même ainsi que celles de l'agrafe de retenue du bandeau intérieur du panneau de porte sont indiquées en référence au repère LTV, ces orientations L, T, V correspondent aux directions respectivement longitudinale, transversale et verticale du repère XYZ du véhicule, soit aussi en référence à une porte battante latérale du véhicule en position fermée.

Les termes « gauche » et « droit » font référence aux côtés usuels respectivement gauche et droit du véhicule, sauf précision contraire.

Les figures 1 à 2 ont été commentées plus haut dans la description.

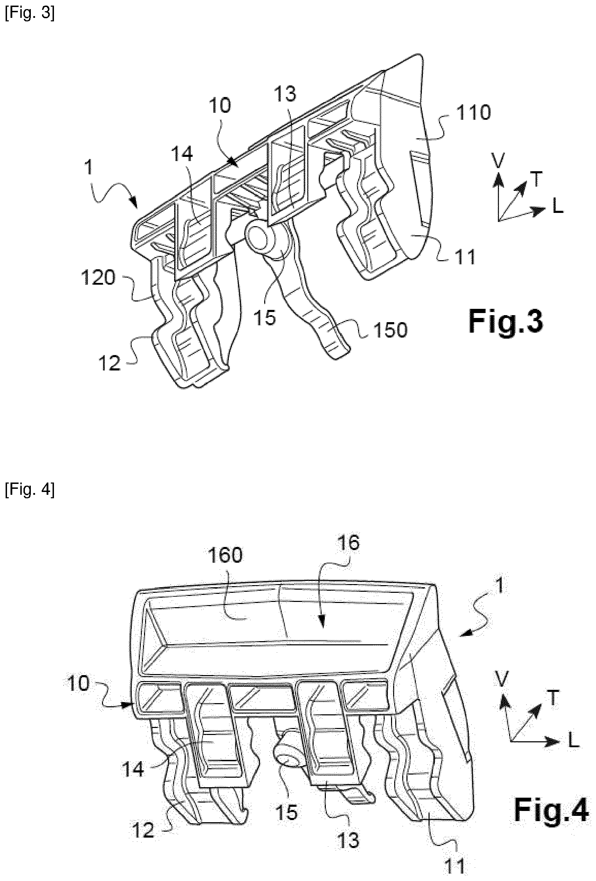

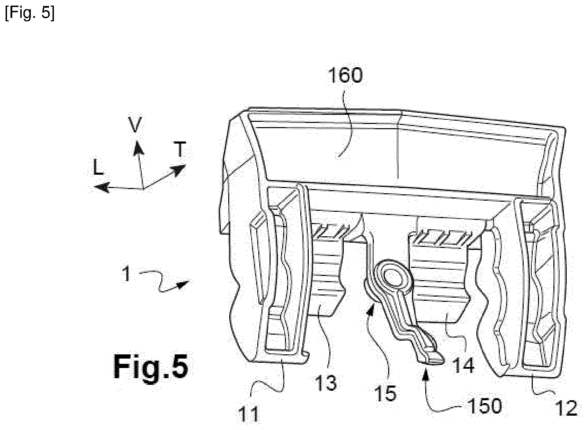

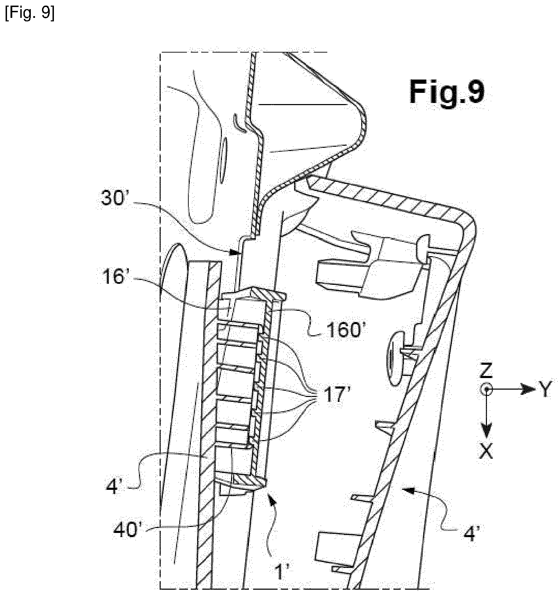

Les figures 3 à 8 représentent un mode de réalisation préféré, et non limitatif, de l'invention et la figure 9 représente une variante de réalisation d'une zone de l'agrafe.

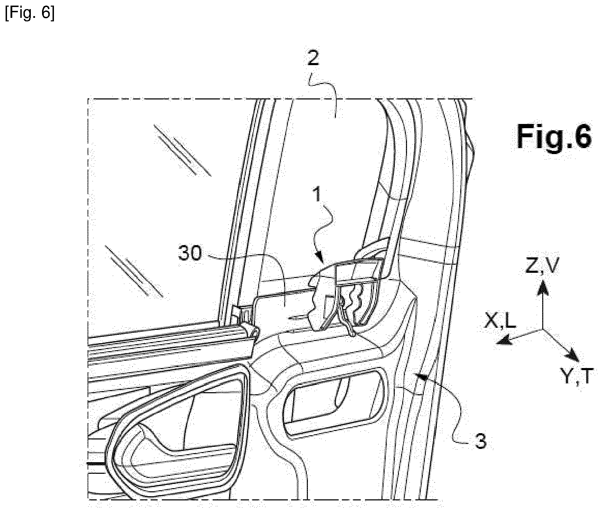

Les figures 3 à 5 représentent sous différents angles de vue en perspective, une agrafe de retenue selon l'invention pour solidariser un bandeau intérieur de porte à la feuillure d'un panneau de porte vitré d'un véhicule automobile, en partie supérieure dudit panneau sous la partie vitrée et dans la zone d'une vitre fixe, comme illustré en figures 6 à 8. Plus particulièrement l'agrafe est employée pour retenir le bandeau de garniture intérieur d'un panneau de porte latérale, et avantageusement d'une porte à proximité de la planche de bord, ce qui est le cas d'une porte latérale avant.

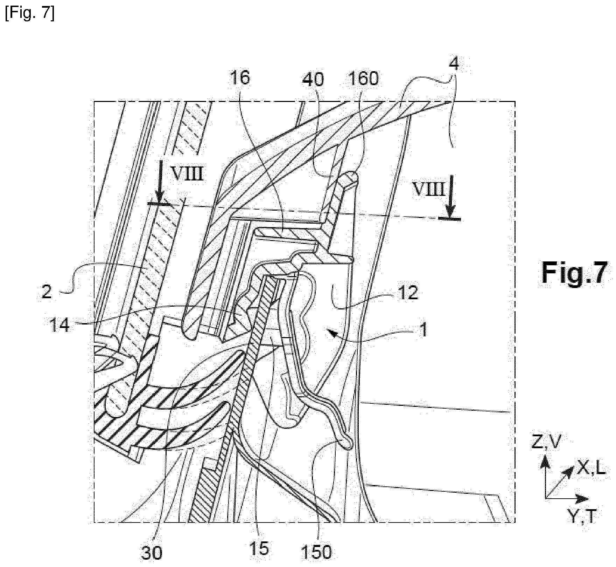

La constitution de l'agrafe selon les figures 3 à 5 est décrite ci-après en lien avec la figure 6 et aussi les figures 7 à 8 et 9 dans lesquelles ladite agrafe est montée sur le panneau de porte et y retient le bandeau de garniture intérieur.

L'agrafe selon l'invention est avantageusement réalisée sous forme d'une pièce monobloc, et en matière plastique chargée, ce qui la rend compacte mais robuste.

L'agrafe 1 comprend une poutre principale 10, avantageusement de structure renforcée mécaniquement par caissonnage selon l'exemple. Ladite poutre 10 est prolongée en sa partie inférieure, sur l'une de ses faces longitudinales, par deux doigts de retenue en appui 11, 12 qui peuvent ainsi se disposer en appui sur la feuillure 30 du panneau de porte comme illustré par exemple en figures 6 ou 7. Ces deux doigts d'appui 11, 12 sont disposés chacun latéralement en ladite face de l'agrafe. Leur structure respective est aussi avantageusement renforcée mécaniquement, par exemple par caissonnage selon l'exemple. Lesdits doigts d'appui 11, 12 sont en outre renforcés chacun respectivement par un flanc latéral externe 110, 120, solidaire de ladite poutre principale 10.

Ladite poutre 10 se prolonge en sa partie inférieure et sur son autre face longitudinale par deux doigts d'accrochage 13, 14 qui peuvent ainsi venir s'accrocher sur la feuillure 30 du panneau de porte comme illustré par exemple en figures 6 ou 7. Lesdits doigts d'accrochage 13, 14 sont disposés avantageusement dans l'espace opposé à celui délimité par les doigts d'appui 11, 12, et plus centrés, ce qui consolide la retenue de l'agrafe 1 par pincement sur la feuillure de porte. Lesdits doigts d'accrochage 13, 14 sont également renforcés mécaniquement, selon l'exemple par une structure à caissons.

Ladite agrafe 1 comprend en outre un doigt de positionnement longitudinal 15 pour faciliter le positionnement de l'agrafe sur la feuillure 30 du panneau porte en X et avoir en outre une action anti-retour dans la direction verticale Z quand l'agrafe est retenue à la feuillure du panneau de porte. Ledit doigt de positionnement longitudinal 15 est disposé par rattachement en prolongement de la partie inférieure de ladite poutre principale 10. Il présente une forme cylindrique creuse d'axe de révolution orienté transversalement (direction T) dont une extrémité est fermée par une paroi inclinée qui favorisera son insertion ou retrait dans l'orifice récepteur sur la feuillure 30. Il est en outre disposé sur la même face longitudinale que les doigts d'appui 11, 12 et sensiblement centré sur cette face, soit aussi entre lesdits doigts d'appui 11, 12. Ledit doigt de positionnement 15 doit être accessible lors du montage ou retrait de l'agrafe sur la feuillure, il est donc de préférence côté opposé au vitrage de la porte.

Ledit doigt de positionnement longitudinal 15 se prolonge par une languette 150 qui aide au déverrouillage de l'agrafe pour la retirer de la feuillure par exemple.

L'agrafe comprend en outre une zone d'accueil 16 pour recevoir le bandeau de garniture intérieur 40, soit la partie du bandeau recourbée côté vitre. Ladite zone d'accueil 16 est située en la partie supérieure de ladite agrafe, formée par la paroi supérieure de ladite poutre principale 10, et une paroi de butée 160 contre laquelle viendra se caler transversalement le bandeau. Cette zone d'accueil comprend aussi des rebords de chaque côté de ladite paroi de butée 160, ici coupés en biais en leur partie supérieure, ce qui donne aussi la fonction de rampe de guidage à ladite paroi de butée 160, pour faciliter le positionnement du bandeau de garniture, en particulier de sa partie de positionnement. Ladite zone d'accueil est creuse et ouverte pour y accueillir un boitier de positionnement 40 du bandeau 4 comme cela sera explicité en commentaire des figures 7 à 9.

Selon une variante de réalisation avantageuse, ladite zone d'accueil peut comprendre des moyens de réglage du positionnement transversal du bandeau, sous forme par exemple de nervures 17', aptes à coopérer avec le boitier de positionnement du bandeau comme explicité plus loin en référence à la figure 9 pour une agrafe 1' selon l'invention.

La figure 7 par une vue en coupe transversale dans le plan YZ, montre une porte avec une partie de vitre fixe 2, et dont le bandeau de garniture intérieur 4 est retenue par l'agrafe 1 décrite ci-dessus, une fois ladite agrafe retenue elle-même sur la feuillure 30 du panneau de porte. La feuillure 30 est prise en sandwich entre les doigts d'un côté d'appui 11, 12 et de l'autre d'accrochage 13, 14 de ladite agrafe, le doigt de positionnement longitudinal 15 de l'agrafe étant introduit à travers un orifice traversant réalisé dans la feuillure 30. Le bandeau 40 en sa partie recourbée vers la partie vitrée de la porte, en particulier vers la vitre fixe 2, vient, grâce à un boitier de positionnement 40 que comprend le bandeau, en appui vertical (en Z) et en butée transversale (en Y) sur la zone d'accueil 16 de ladite agrafe.

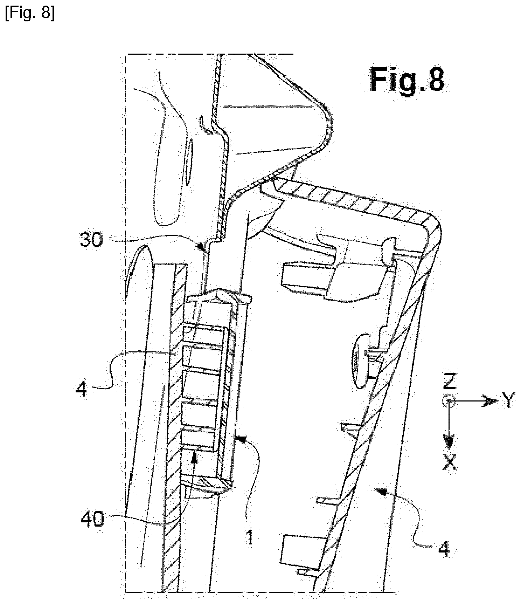

La figure 8 est une vue en coupe longitudinale dans le plan XY de la porte, réalisée au niveau de la zone d'accueil 16 de l'agrafe réceptrice du boitier 40 de positionnement transversal du bandeau de garniture 4, soit dans le plan de coupe VIII-VIII de la figure 7. Ledit boitier de positionnement 40 est constitué de nervures intégrées audit bandeau. Il vient se caler transversalement (en Y) contre la paroi de butée 160 de la zone d'accueil de l'agrafe 1.

La figure 9 est une vue d'une variante de réalisation de l'invention, suivant laquelle la zone d'accueil de l'agrafe 1' réceptrice du boitier de positionnement transversal du bandeau de garniture comprend des moyens de réglage coopérant avec ledit boitier selon un plan de coupe longitudinale dans le plan XY de la porte, similaire au plan de coupe VIII-VIII de la figure 7, situé au niveau de l'interférence entre lesdits moyens de réglage portés par la zone d'accueil 16' de ladite agrafe 1' et du boitier de nervures 40' du bandeau 4'. Selon l'exemple, lesdits moyens de réglage en zone d'accueil de l'agrafé 1' sont formés par des nervures 17' qui s'étendent sur la face de la paroi de butée 160' de la zone d'accueil 16' de l'agrafe contre laquelle se cale le boitier 40' du bandeau de garniture 4', ces nervures 17' s'étendant depuis la paroi supérieure de la poutre 10. Sur cette figure 9, pour les éléments représentés identiques ou similaires à ceux des éléments représentés sur les figures 3 à 8, les mêmes références chiffrées ont été conservées mais augmentées du symbole prime. Avec cette agrafe plastique, il est possible de régler la position Y du bandeau en créant une interférence de quelques dixièmes de millimètre et jusqu'à 2 millimètres entre l'agrafe et le boîtier pour rattraper les défauts géométriques cumulés. Ce réglage se fait par exemple par l'ajout de 2 à 5 nervures en zone d'accueil de l'agrafe.

La retenue transversale (en Y) du bandeau de garniture par l'agrafe selon l'invention montée en Z au niveau de l'extrémité du bandeau en zone de vitre fixe se situe presque au niveau d'une ligne parallèle à celle de la planche de bord, ce qui garantit en particulier une stabilité géométrique, notamment lors des dilatations liées à l'ensoleillement.

L'agrafe de retenue du bandeau de garniture de porte selon l'invention est particulièrement économique dans la mesure où elle ne nécessite pas d'opération de bouterolage d'une clé rapportée comme selon l'art antérieur décrit par exemple en référence à la figure 2.

L'agrafe selon l'invention facilite la pose du bandeau de garniture. Elle facilite la détection d'un mauvais montage par l'opérateur car il n'y a plus de possibilités de monter le bandeau sans constater une forte gêne lors du montage, donc bien avant le montage de la porte sur le véhicule. Ceci participe aussi au caractère économique de l'invention.

## Revendications

1. Agrafe de retenue (A, 1, 1') d'un bandeau de garniture intérieur (B', 4, 4') d'une porte d'un véhicule comprenant un panneau avec une baie obturée par un vitrage dont une vitre fixe (V2', 2, 2'), ladite agrafe étant configurée apte à se solidariser à la feuillure (F, 30, 30') dudit panneau en zone de vitre fixe, **caractérisée en ce que** ladite agrafe (1, 1') est en matière plastique, et qu'elle comprend une poutre longitudinale (10) prolongée en sa partie inférieure d'un premier côté longitudinal par des doigts d'appui (11, 12) configurés pour une retenue de l'agrafe par appui sur la feuillure (30, 30') du panneau de porte et de l'autre côté longitudinal par des doigts d'accrochage (13, 14) configurés pour s'accrocher sur la feuillure (30, 30') du panneau de porte, et entre lesquels se situe un doigt (15) de positionnement longitudinal de l'agrafe dans la feuillure.

2. Agrafe de retenue selon la revendication 1, **caractérisée en ce qu'**elle comprend une zone d'accueil (16, 16'), apte à recevoir un bandeau de garniture (4, 4'), s'étendant longitudinalement au-dessus de la partie supérieure de la poutre (10), et présentant des moyens de positionnement transversal du bandeau de garniture (160, 160', 17').

3. Agrafe de retenue selon la revendication 2, **caractérisée en ce que** lesdits moyens de positionnement transversal du bandeau de garniture(4'), comprennent des moyens de réglage du positionnement transversal (17') du bandeau aptes à coopérer avec ledit bandeau.

4. Agrafe de retenue selon la revendication 3, **caractérisée en ce que** lesdits moyens de positionnement transversal du bandeau de garniture (4') comprennent une butée (160') et **en ce que** lesdits moyens de réglage comprennent des nervures (17') s'étendant au moins en partie sur la surface de ladite butée (160').

5. Agrafe de retenue selon l'une des revendications 1 à 4, **caractérisée en ce qu'**elle est constituée d'une pièce monobloc et en matière plastique chargée.

6. Agrafe de retenue selon l'une des revendications 1 à 5, **caractérisée en ce qu'**elle comprend une languette de déverrouillage (150), présente dans le prolongement de la partie inférieure dudit doigt de positionnement longitudinal (15).

7. Porte d'un véhicule automobile comprenant un panneau qui comprend au moins une baie obturée par un vitrage dont une vitre fixe (V2', 2, 2') et un bandeau de garniture intérieur (B', 4, 4') retenu à la feuillure (F, 30, 30') du panneau par une agrafe de retenue (A, 1, 1') en zone de ladite vitre fixe, **caractérisée en ce que** ladite agrafe de retenue (1, 1') est définie selon l'une des revendications 1 à 6, et **en ce que** la feuillure du panneau comprend en outre un orifice récepteur du doigt de positionnement longitudinal de ladite agrafe.

8. Porte selon la revendication 7, **caractérisée en ce que** ladite agrafe de retenue (1, 1') comprend une zone d'accueil (16,16') dudit bandeau de garniture (4, 4') comportant des moyens de positionnement transversal dudit bandeau qui comprennent une butée (160,160'), et **en ce que** ledit bandeau comprend un boitier de positionnement transversal (40, 40') positionné sur la zone d'accueil (16, 16') et calé contre la butée (160, 160') en zone d'accueil.

9. Porte selon la revendication 8, **caractérisée en ce que** lesdits moyens de positionnement transversal dudit bandeau de garniture incluent des moyens de réglage du positionnement transversal (17') dudit bandeau constitués de nervures s'étendant au moins en partie sur la surface de ladite butée (160'), et **en ce que** ledit boitier de positionnement transversal (40') est constitué de nervures intégrées audit bandeau (4') interférant avec lesdites moyens de réglage (17') en zone d'accueil de l'agrafe (1').

10. Véhicule automobile comprenant au moins une porte latérale définie à l'une des revendications 7 à 9, et en particulier ladite porte latérale est une porte située à proximité de la planche de bord du véhicule.

## Patentansprüche

1. Rückhalteklammer (A, 1, 1') einer Innenverkleidungsblende (B', 4, 4') einer Fahrzeugtür, die ein Paneel mit einer Öffnung aufweist, die von einer Verglasung, davon eine feste Scheibe (V2', 2, 2'), verschlossen ist, wobei die Klammer dazu ausgebildet ist, mit dem Falz (F, 30, 30') des Paneels im Bereich der festen Scheibe fest verbunden zu sein, **dadurch gekennzeichnet, dass** die Klammer (1, 1') aus Kunststoff ist und dass sie einen Längsträger (10) aufweist, der in seinem unteren Abschnitt auf einer ersten Längsseite von Stützfingern (11, 12), die für einen Rückhalt der Klammer durch Drücken auf den Falz (30, 30') des Türpaneels ausgebildet sind, und auf der anderen Längsseite von Befestigungsfingern (13, 14), die dazu ausgebildet sind, an dem Falz (30, 30') des Türpaneels befestigt zu sein, und zwischen denen sich ein Finger (15) zur Längspositionierung der Klammer im Falz befindet, verlängert ist.

2. Rückhalteklammer nach Anspruch 1, **dadurch gekennzeichnet, dass** sie einen Aufnahmebereich (16, 16') umfasst, der geeignet ist, eine Verkleidungsblende (4, 4') aufzunehmen, der sich in Längsrichtung über dem oberen Abschnitt des Trägers (10) erstreckt und Mittel zur Querpositionierung der Verkleidungsblende (160, 160', 17') aufweist.

3. Rückhalteklammer nach Anspruch 2, **dadurch gekennzeichnet, dass** die Mittel zur Querpositionierung der Verkleidungsblende (4') Mittel zur Einstellung der Querpositionierung (17') der Blende aufweisen, die geeignet sind, mit der Blende zusammenzuwirken.

4. Rückhalteklammer nach Anspruch 3, **dadurch gekennzeichnet, dass** die Mittel zur Querpositionierung der Verkleidungsblende (4') einen Anschlag (160') umfassen, und dadurch, dass die Einstellmittel Rippen (17') umfassen, die sich wenigstens teilweise auf der Oberfläche des Anschlags (160') erstrecken.

5. Rückhalteklammer nach einem der Ansprüche 1 bis 4, **dadurch gekennzeichnet, dass** sie von einem einstückigen Teil aus gefülltem Kunststoff gebildet ist.

6. Rückhalteklammer nach einem der Ansprüche 1 bis 5, **dadurch gekennzeichnet, dass** sie eine Entriegelungszunge (150) aufweist, die in der Verlängerung des unteren Abschnitts des Längspositionierungsfingers (15) vorhanden ist.

7. Kraftfahrzeugtür umfassend ein Paneel, das mindestens eine Öffnung, die von einer Verglasung, davon eine feste Scheibe (V2', 2, 2'), verschlossen ist, und eine Innenverkleidungsblende (B', 4, 4'), die am Falz (F, 30, 30') des Paneels von einer Rückhalteklammer (A, 1, 1') im Bereich der festen Scheibe zurückgehalten wird, umfasst, **dadurch gekennzeichnet, dass** die Rückhalteklammer (1, 1') nach einem der Ansprüche 1 bis 6 definiert ist, und dadurch, dass der Falz des Paneels ferner eine Aufnahmeöffnung des Längspositionierungsfingers der Klammer umfasst.

8. Tür nach Anspruch 7, **dadurch gekennzeichnet, dass** die Rückhalteklammer (1, 1') einen Aufnahmebereich (16, 16') der Verkleidungsblende (4, 4') umfasst, der Mittel zur Querpositionierung der Blende aufweist, die einen Anschlag (160, 160') umfassen, und dadurch, dass die Blende ein Gehäuse zur Querpositionierung (40, 40') umfasst, das am Aufnahmebereich (16, 16') positioniert und gegen den Anschlag (160, 160') im Aufnahmebereich verkeilt ist.

9. Tür nach Anspruch 8, **dadurch gekennzeichnet, dass** die Mittel zur Querpositionierung der Verkleidungsblende Mittel zur Einstellung der Querpositionierung (17') der Blende aufweisen, die von Rippen gebildet sind, die sich wenigstens teilweise auf der Oberfläche des Anschlags (160') erstrecken, und dadurch, dass das Gehäuse zur Querpositionierung (40') von Rippen gebildet ist, die in die Blende (4') integriert sind, die mit den Einstellmitteln (17') im Aufnahmebereich der Klammer (1') zusammenwirken.

10. Kraftfahrzeug umfassend mindestens eine Seitentür nach einem der Ansprüche 7 bis 9, und insbesondere ist die Seitentür eine Tür, die sich in der Nähe des Armaturenbretts des Fahrzeugs befindet.

## Claims

1. Retaining clip (A, 1, 1') for an interior trim strip (B', 4, 4') of a door of a vehicle comprising a panel having an opening that is closed by a window that includes a fixed pane (V2', 2, 2'), said clip being configured in such a way that it can be secured to the rebate (F, 30, 30') of said panel in the fixed pane region, **characterized in that** said clip (1, 1') is made of plastic material, and **in that** it comprises a longitudinal beam (10) whose lower part is extended on a first longitudinal side by bearing fingers (11, 12) that are configured to retain the clip by pressing on the rebate (30, 30') of the door panel, and on the other longitudinal side by latching fingers (13, 14) that are configured to latch onto the rebate (30, 30') of the door panel, and between which there is a finger (15) for longitudinal positioning of the clip in the rebate.

2. Retaining clip according to Claim 1, **characterized in that** it comprises a receiving region (16, 16') that is able to receive a trim strip (4, 4') extending longitudinally above the upper part of the beam (10), and having means for the transverse positioning of the trim strip (160, 160', 17').

3. Retaining clip according to Claim 2, **characterized in that** said means for the transverse positioning of the trim strip (4') comprise means for adjusting the transverse positioning (17') of the strip, which means are able to cooperate with said strip.

4. Retaining clip according to Claim 3, **characterized in that** said means for the transverse positioning of the trim strip (4') comprise an abutment (160') and **in that** said adjusting means comprise ribs (17') extending at least partially over the surface of said abutment (160').

5. Retaining clip according to one of Claims 1 to 4, **characterized in that** it consists of a one-piece part made of filled plastic material.

6. Retaining clip according to one of Claims 1 to 5, **characterized in that** it comprises an unlocking tab (150) that is present in the extension of the lower part of said longitudinal positioning finger (15).

7. Motor vehicle door comprising a panel that comprises at least one opening that is closed by a window that includes a fixed pane (V2', 2, 2') and an interior trim strip (B', 4, 4') that is retained on the rebate (F, 30, 30') of the panel by a retaining clip (A, 1, 1') in the region of said fixed pane, **characterized in that** said retaining clip (1, 1') is as defined in one of Claims 1 to 6, and **in that** the rebate of the panel further comprises an orifice for receiving the longitudinal positioning finger of said clip.

8. Door according to Claim 7, **characterized in that** said retaining clip (1, 1') comprises a receiving region (16, 16') for said trim strip (4, 4'), comprising means for the transverse positioning of said strip, which comprise an abutment (160, 160'), and **in that** said strip comprises a transverse positioning box (40, 40') that is positioned on the receiving region (16, 16') and is wedged against the abutment (160, 160') in the receiving region.

9. Door according to Claim 8, **characterized in that** said means for the transverse positioning of said trim strip include means for adjusting the transverse positioning (17') of said strip, these consisting of ribs extending at least partially over the surface of said abutment (160'), and **in that** said transverse positioning box (40') consists of ribs that are integrated into said strip (4') and interact with said adjustment means (17') in the receiving region of the clip (1').

10. Motor vehicle comprising at least one side door as defined in one of Claims 7 to 9, and in particular said side door is a door located close to the dashboard of the vehicle.
